# EUROPEAN PATENT APPLICATION

(11) **EP 0 827 814 A1**
(43) Date of publication of application: **11.03.1998**
(21) Application number: 97115192.3
(22) Date of filing: 02.09.1997
(51) Int. Cl.: B25J 19/00

(54) **Workpiece transfer robot**

(30) Priority: 04.09.1996 JP 253849/96
(71) Applicant: EBARA CORPORATION, Ohta-ku, Tokyo (JP); Rorze Corporation, Fukayasu-gun, Hiroshima-ken 720-21 (JP)
(72) Inventor: Togawa, Tetsuji, Chigasaki-shi, Kanagawa-ken (JP); Yamaguchi, Kuniaki, Yokohama-shi, Kanagawa-ken (JP); Kojima, Shunichiro, Yokohama-shi, Kanagawa-ken (JP); Tsujimura, Manabu, Yokohama-shi, Kanagawa-ken (JP); Kuwada, Keiji, Fuchu-shi, Hiroshima-ken (JP); Mihara, Yasushi, Onomichi-shi, Hiroshima-ken (JP)
(74) Representative: Wagner, Karl H., Dipl.-Ing.

(57) **Abstract**

A workpiece transfer robot (1) is used to transfer a workpiece such as a semiconductor wafer from one operation to the next. The workpiece transfer robot has a liquid-tight mechanism for preventing liquid such as water (39) from entering the interior of a component such as an arm (25) or a robot body (10). The workpiece transfer robot includes a robot body, at least one arm operatively coupled to the robot body by at least one joint, a holder mechanism mounted on the arm for holding a workpiece, and an oilless sliding seal (41) provided at the joint for preventing liquid from entering the interior of the joint.

## Description

### BACKGROUND OF THE INVENTION

### Field of the Invention:

The present invention relates to a workpiece transfer robot for transferring a workpiece such as a semiconductor wafer from one operation to the next, and more particularly to a workpiece transfer robot having a liquid-tight mechanism for preventing liquid such as water from entering the interior of a component including an arm, a robot body and the like.

### Description of the Related Art:

There have heretofore been known workpiece transfer robots which have a plurality of articulated arms operatively coupled to a robot body through joints, and a holder mechanism mounted on a tip end of the distal arm for holding a workpiece.

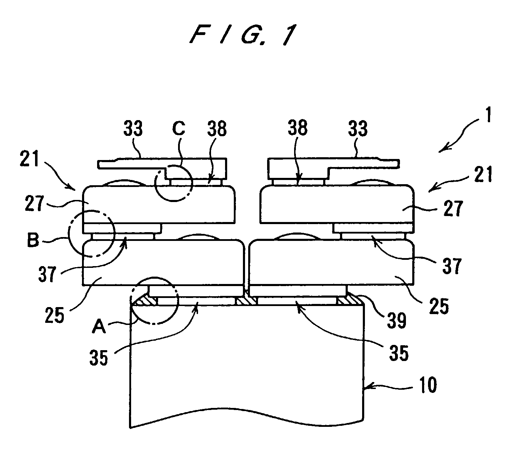

FIG. 1 of the accompanying drawings shows a workpiece transfer robot 1 for use as a workpiece transfer robot having a vacuum chuck for transferring semiconductor wafers. As shown in FIG. 1, the workpiece transfer robot 1 comprises a substantially cylindrical robot body 10 and a pair of arm mechanisms 21 mounted on an upper surface of the robot body 10.

Each of the arm mechanisms 21 comprises two articulated arms 25, 27. The arm 25 is operatively connected to the robot body 10 by a joint 35 and the arm 27 is operatively connected to the arm 25 by a joint 37. A pair of vacuum chuck mechanisms 33 for holding semiconductor wafers as workpieces under vacuum is operatively connected to the respective arms 27 by joints 38.

Each of the joints 35, 37 is provided with a magnetic fluid seal for preventing dust particles from being generated therefrom.

There are many manufacturing facilities or equipments which incorporate the workpiece transfer robots and use liquid such as pure water in some processes. During operation of the workpiece transfer robot 1, liquid such as pure water is liable to be attached to the surfaces of workpieces such as semiconductor wafers that are being carried by the vacuum chuck mechanisms 33. When the arm mechanisms 21 are actuated, the liquid tends to drop from the semiconductor wafers and stays on the robot body 10 and the arms 25, 27.

Since the magnetic fluid seals are not resistant to liquid such as water, when the liquid such as water is deposited around the joints 35 in greater quantities as shown by hatching parts 39, the liquid enters through the magnetic fluid seals into the interiors of the robot body 10 and the arms 25, thus causing corrosion to internal mechanisms of the workpiece transfer robot 1.

The magnetic fluid seals may be replaced with O-rings for making the joints 35 liquid-tight. However, because the O-rings impose relatively large resistance to the sliding motion, an undue load is necessary for rotating the arms 25.

The workpiece transfer robot 1 with the vacuum chuck mechanism 33 includes a vacuum path extending from the interior of the robot body 10 through the interiors of the arms 25, 27 and the interiors of the joints 35, 37, 38 to the vacuum chuck mechanism 33.

If leakage occurs in the vacuum path in the arm 25, then vacuum will be developed in the arm 25. Even if the joint 35 is sealed, the joint 35 may suffer a seal failure, which results in a leakage for the vacuum developed in the arm 25. Accordingly, the water 39 around the joint 35 may be drawn into the interior of the joint 35 under suction caused by the leakage, and may cause corrosive damage to the interiors of the arm 25 and the robot body 10. Same problem occurs at the joints 37, 38.

One solution would be to develop an internal pressure higher than the atmospheric pressure in the arm 25 for driving the water 39 out from the arm 25. However, such a high internal pressure is liable to eject other foreign matter as well as the drawn water 39 out of the arm 25, thus contaminating the exterior of the arm 25.

### SUMMARY OF THE INVENTION

It is therefore an object of the present invention to provide a workpiece transfer robot having a liquid-tight mechanism which prevents external liquid from entering the interiors of a robot body and an arm mounted thereon, imposes relatively small resistance to sliding motion, and is relatively simple in structure.

According to the first aspect of the present invention, there is provided a workpiece transfer robot comprising: a robot body; at least one arm operatively coupled to the robot body by at least one joint; a holder mechanism mounted on the arm for holding a workpiece; and an oilless sliding seal provided at the joint for preventing liquid from entering an interior of the joint.

According to the second aspect of the present invention, there is provided a workpiece transfer robot comprising: a robot body; at least one arm operatively coupled to the robot body by at least one joint; a holder mechanism mounted on the arm for holding a workpiece; and a seal mechanism provided at the joint for preventing liquid from entering an interior of the joint, sealing area of the seal mechanism being provided at a position higher than the highest surface level of liquid deposited on an upper surface of one of the robot body and the arm.

According to the third aspect of the present invention, there is provided a workpiece transfer robot comprising: a robot body; at least one arm operatively coupled to the robot body by at least one joint; a vacuum chuck mechanism mounted on the arm for holding a workpiece under vacuum; a vacuum path extending from the robot body through the joint and the arm to the vacuum chuck mechanism; a seal mechanism provided at the joint for preventing liquid from entering an interior of the joint; and a vent hole provided in the arm for substantially equalizing a pressure in the arm to a pressure outside of the arm.

The above and other objects, features, and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a fragmentary side elevational view of a workpiece transfer robot;
FIG. 2 is an enlarged fragmentary cross-sectional view of a joint of a workpiece transfer robot which incorporates a liquid-tight mechanism according to a first embodiment of the present invention;
FIG. 3 is a fragmentary side elevational view of a workpiece transfer robot which incorporates a liquid-tight mechanism according to a second embodiment of the present invention;
FIG. 4 is an enlarged fragmentary cross-sectional view of an encircled portion D in FIG. 3;
FIG. 5 is a fragmentary side elevational view of a workpiece transfer robot which incorporates a liquid-tight mechanism according to a third embodiment of the present invention; and
FIG. 6 is an enlarged fragmentary cross-sectional view of a portion having a vent hole in the workpiece transfer robot shown in FIG. 5.

### DETAILED DESCRIPTION OF THE PREFERRED EMBODIMENTS

The principles of the present invention are applicable to a workpiece transfer robot which is basically similar to the workpiece transfer robot shown in FIG. 1.

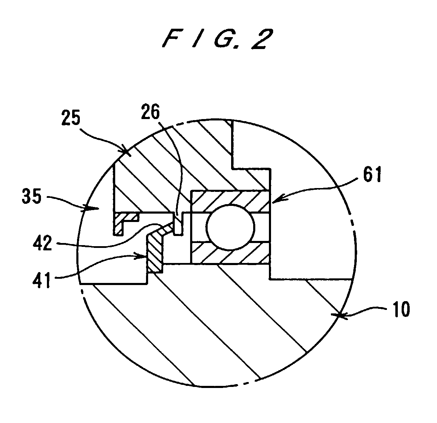

FIG. 2 shows a joint 35 of a workpiece transfer robot which incorporates a liquid-tight mechanism according to a first embodiment of the present invention. The joint 35 shown in FIG. 2 corresponds to an encircled portion A in FIG. 1. Those parts shown in FIG. 2 which are identical to those shown in FIG. 1 are denoted by identical reference numerals, and will not be described in detail below.

As shown in FIG. 2, the joint 35 includes a bearing mechanism 61 disposed between the robot body 10 and the arm 25 for supporting the arm 25 rotatably on the robot body 10. An actuator mechanism (not shown) extends in the bearing mechanism 61 for transmitting driving forces from the robot body 10 to the arm 25 for angularly moving the arm 25 with respect to the robot body 10.

According to the first embodiment, an oilless sliding dry seal 41 is disposed around the bearing mechanism 61 and mounted on the robot body 10.

The oilless sliding dry seal 41 comprises a ring member made of synthetic resin such as fluorocarbon resin which suffers relatively small wear and has relatively low sliding friction. The oilless sliding dry seal 41 has an axial upper end which is tapered to form an annular sliding lip 42 having a smaller inner diameter. The oilless sliding dry seal 41 has an axial lower end fixed to an upper surface of the robot body 10. The arm 25 has an annular sliding ridge 26 extending downwardly therefrom and arranged radially inwardly of the oilless sliding dry seal 41.

The annular sliding lip 42 has a tip end held in intimate sliding contact with an outer circumferential surface of the annular sliding ridge 26, thereby providing a secure seal between the annular sliding lip 42 and the annular sliding ridge 26. That is, a full-circumferential surface of the joint 35 is sealed by an intimate contact between the annular sliding lip 42 and the annular sliding ridge 26. Since the oilless sliding dry seal 41 is made of fluorocarbon resin, it has a smaller sliding resistance compared with an O-ring.

The oilless sliding dry seal 41 may be incorporated in each of encircled portions B, C of the joints 37, 38 (see FIG. 1).

Operation of the workpiece transfer robot 1 will be described below. When the vacuum chuck mechanism 33 (see FIG. 1) holds a semiconductor wafer (not shown) as a workpiece under vacuum and transports the semiconductor wafer, liquid such as pure water attached to the semiconductor wafer drops and is deposited on the upper surface of the robot body 10.

When the water 39 (shown by hatching parts in FIG. 1) is gradually deposited around the joint 35 in greater quantities, it tends to enter through the joint 35 into the interiors of the robot body 10 and the arm 25. However, the water 39 is prevented from entering the interior of the joint 35 by the annular sliding lip 42 and the annular sliding ridge 26 which are closely held in sliding contact with each other. Thus, internal mechanisms of the workpiece transfer robot 1 and the interior of the arm 25 are protected from corrosion.

Since the oilless sliding dry seal 41 has a smaller sliding resistance compared with an O-ring, an electric motor for actuating the arm mechanisms 21 (see FIG. 1) may be of smaller output power requirements. Thus, the electric motor may be an energy saver, less costly, and small in size.

The oilless sliding dry seal 41 may be installed in only those joints positioned at areas where water is more likely to be deposited.

The oilless sliding dry seal 41 may be fixed to the arm 25, and the annular sliding ridge 26 may be provided on the robot body 10.

The oilless sliding dry seal 41 may be made of any other synthetic resin than fluorocarbon resin insofar as it suffers relatively small wear and has relatively low sliding friction.

The oilless sliding dry seal 41 may be applicable to various types of workpiece transfer robots other than the workpiece transfer robot with the vacuum chuck.

Even though an O-ring is used in the robot in place of the oilless sliding dry seal, if fluorocarbon resin coating is applied to the surface of the O-ring, then the sliding resistance can be reduced, and hence the same effect can be obtained. Further, by changing material of the O-ring from rubber to material having a low sliding resistance such as fluorocarbon resin, the same effect can be obtained.

In the first embodiment, since the oilless Gliding dry seal 41 and the annular sliding ridge 26 are held in mechanical contact with each other, if vacuum is developed in the arm 25 due to a leakage from a vacuum path in the workpiece transfer robot, then the water 39 may possibly enter through the seal between the oilless sliding dry seal 41 and the annular sliding ridge 26 into the interior of the joint 35 due to a large pressure difference between the atmospheric pressure and the pressure in the arm 25.

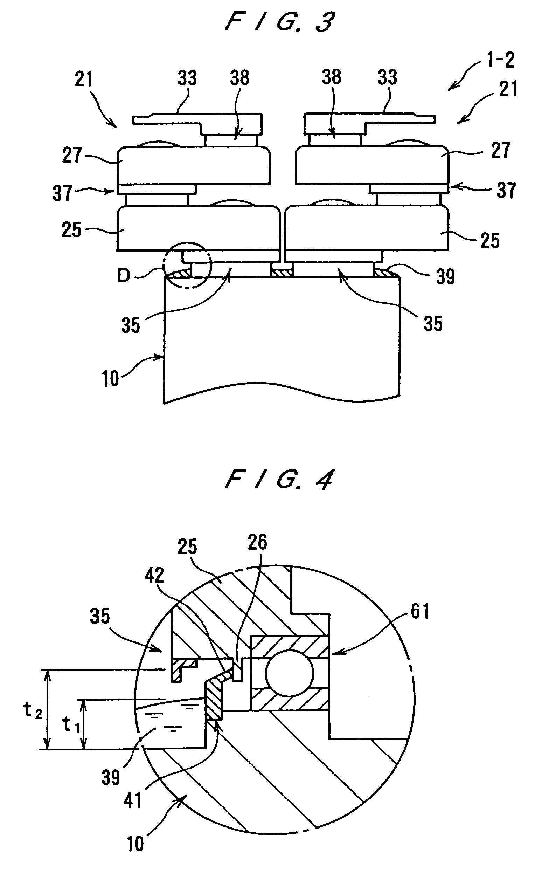

FIGS. 3 and 4 show a workpiece transfer robot which incorporates a liquid-tight mechanism according to a second embodiment of the present invention which is designed to prevent liquid such as water from entering the interior of the joint even under a large pressure difference between the atmospheric pressure and the pressure in the arm.

As shown in FIG. 3, a workpiece transfer robot 1-2 comprises a substantially cylindrical robot body 10 and a pair of arm mechanisms 21 mounted on an upper surface of the robot body 10. Each of the arm mechanisms 21 comprises two articulated arms 25, 27. The arm 25 is operatively connected to the robot body 10 by a joint 35 and the arm 27 is operatively connected to the arm 25 by a joint 37. A pair of vacuum chuck mechanisms 33 for holding semiconductor wafers under vacuum is operatively connected to the respective arms 27 by joints 38.

FIG. 4 shows an encircled portion D in FIG. 3 in enlarged cross section.

As shown in FIG. 4, the joint 35 includes a bearing mechanism 61 disposed between the robot body 10 and the arm 25 for supporting the arm 25 rotatably on the robot body 10. An oilless sliding dry seal 41 is disposed around the bearing mechanism 61 and mounted on the robot body 10. The oilless sliding dry seal 41 has an axial upper end which is tapered to form an annular sliding lip 42 having a smaller inner diameter. The oilless sliding dry seal 41 has an axial lower end fixed to an upper surface of the robot body 10. The arm 25 has an annular sliding ridge 26 extending downward therefrom and arranged radially inwardly of the oilless sliding dry seal 41. The annular sliding lip 42 has a tip end held in intimate sliding contact with an outer circumferential surface of the annular sliding ridge 26, thereby providing a secure seal between the annular sliding lip 42 and the annular sliding ridge 26.

The oilless sliding dry seal 41 may be incorporated in each of the joints 37, 38.

According to the second embodiment shown in FIGS. 3 and 4, the seal provided by the annular sliding lip 42 and the annular sliding ridge 26, i.e., the area where the annular sliding lip 42 and the annular sliding ridge 26 are held in sliding contact with each other, is provided at a position higher than the highest surface level which can be reached by the water 39 deposited in the largest quantity on the upper surface of the robot body 10 due to the surface tension on the upper surface of the robot body 10.

Specifically, if the highest surface level which can be reached by the deposited water 39 from the upper surface of the robot body 10 is t1 = 5 mm, then the height of the seal provided by the annular sliding lip 42 and the annular sliding ridge 26 from the upper surface of the robot body 10 is t2 = 8 mm.

With this arrangement, even when the water 39 is deposited in the largest quantity on the upper surface of the robot body 10, the water 39 is prevented from reaching the sealing part between the annular sliding lip 42 and the annular sliding ridge 26. Consequently, even if vacuum is developed in the arm 25 due to a leakage from the vacuum path in the workpiece transfer robot 1, no water will enter the interior of the joint 35 through the seal.

In each of the joints 37, 38, the similar seal is provided at a position higher than the highest surface level which can be reached by the water 39 deposited in the largest quantity due to the surface tension on each of the upper surfaces of the arms 25, 27.

In the second embodiment, although the seal comprises the oilless sliding dry seal as in the first embodiment, the seal may be of any of various other seal mechanisms such as an O-ring or a metal seal.

In the embodiment, although the oilless sliding dry seal is applied to the workpiece transfer robot with the vacuum chuck, it is applicable to various types of workpiece transfer robots.

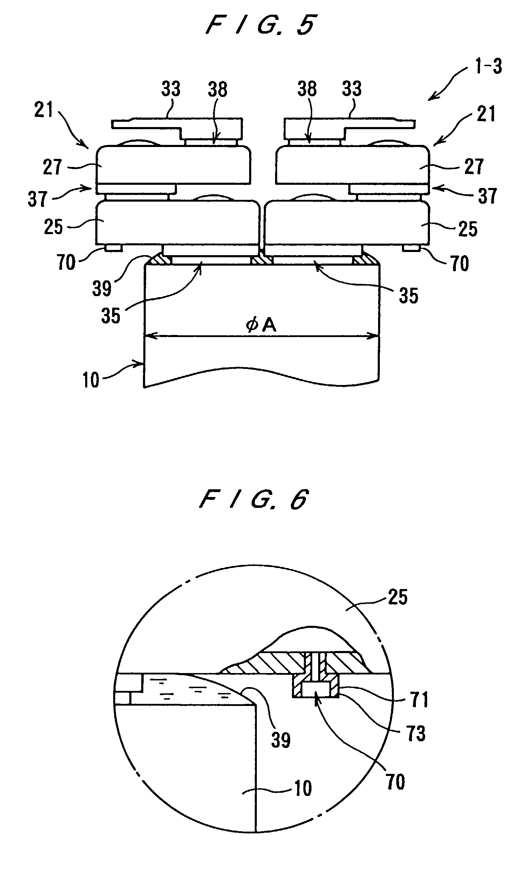

FIGS. 5 and 6 show a workpiece transfer robot which incorporates a liquid-tight mechanism according to a third embodiment of the present invention.

As shown in FIG. 5, a workpiece transfer robot 1-3 comprises a substantially cylindrical robot body 10 having an outer diameter of ΦA, and a pair of arm mechanisms 21 mounted on an upper surface of the robot body 10. Each of the arm mechanisms 21 comprises two articulated arms 25, 27. The arm 25 is operatively connected to the robot body 10 by a joint 35 and the arm 27 is operatively connected to the arm 25 by a joint 37. A pair of vacuum chuck mechanisms 33 for holding semiconductor wafers under vacuum is operatively connected to the respective arms 27 by joints 38.

Each of the joints 35, 37, 38 has a seal mechanism that is identical to the seal mechanism shown in FIG. 2.

According to the third embodiment, a vent hole 70 is formed in a lower surface of each of the arms 25 at a position where the vent hole 70 does not face the upper surface of the robot body 10, i.e., at a position outside of the outer diameter ΦA of the robot body 10, so that the vent hole 70 is away from the water 39 deposited on the upper surface of the robot body 10.

As shown in FIG. 6, the vent hole 70 is defined by a tubular member 71 that is mounted on and extends through the lower surface of the arm 25, thereby providing communication between the interior of the arm 25 and the exterior of the arm 25.

The tubular member 71 comprises two portions having respective different outer diameters and joined to each other at a substantially central region thereof. The smaller-diameter portion of the tubular member 71 is inserted in the arm 25, whereas the larger-diameter portion of the tubular member 71 projects downwardly from the arm 25 and includes an annular bank 73. The tubular member 71 may be integrally formed with the arm 25, and may have a single inner diameter.

The vent hole 70 operates as follows: When the workpiece transfer robot 1-3 operates to cause the vacuum chuck mechanism 33 to hold a semiconductor wafer under vacuum and to transfer the semiconductor wafer, pure water or the like attached to the semiconductor wafer drops and is deposited on the upper surface of the robot body 10 as water 39 thereon.

Since the interior of the arm 25 communicates with the exterior of the arm 25 through the vent hole 70, the pressure in the arm 25 is substantially the same as the atmospheric pressure, and no vacuum is developed in the arm 25 even if the vacuum path in the arm 25 suffers a leakage. Thus, even when the water 39 on the upper surface of the robot body 10 increases in quantity to thus contact the joint 35, the water 39 will not be drawn into the interior of the joint 35. Therefore, the oilless sliding dry seal 41 in the joint 35 is sufficiently effective in preventing the water 39 from entering the interior of the joint 35.

Inasmuch as the vent hole 70 is positioned out of reach of the water 39, the water 39 will not be drawn into the vent hole 70 when air is introduced through the vent hole 70 into the arm 25.

Even if the water 39 reaches the vent hole 70 along the lower surface of the arm 25, it is prevented from entering the interior of the arm 25 by the bank 73 that projects downwardly from the lower surface of the arm 25.

A vent hole may be defined in each of the arms 25, 27 to prevent water deposited on the upper surface of the arm 25 from entering the interior of the arm 27 through the joint 37.

In each of the above embodiments, the number of arms and joints mounted on the robot body is not limited to the illustrated number, but may be one or more.

In the above embodiments, the liquid-tight mechanism is incorporated in a workpiece transfer robot with a vacuum chuck for transferring semiconductor wafers. However, the principles of the present invention are also applicable to other types of workpiece transfer robots.

As described above, the present invention offers the following advantages:

Since liquid such as water is prevented from entering the interior of the arm or the interior of the robot body, the interior of the arm or the internal mechanisms of the robot is protected from corrosion. Consequently, the workpiece transfer robot is required to be serviced less frequently, has a longer service life, and contributes to a higher production rate for products such as semiconductor devices, than the conventional workpiece transfer robot which is not equipped with the sealing mechanism.

Since the oilless sliding dry seal has a smaller sliding resistance compared with an O-ring, an electric motor may be of smaller output power requirements, and may be an energy saver, less costly, and small in size.

Further, the second and third aspects of the present invention are effective in reliably preventing liquid from entering the interior of the workpiece transfer robot even when the vacuum path in the workpiece transfer robot suffers a leakage. Therefore, the workpiece transfer robot in the second and third aspects of the present invention lends itself to use in environments that require a high level of cleanness such as semiconductor fabrication environments.

Although certain preferred embodiments of the present invention have been shown and described in detail, it should be understood that various changes and modifications may be made therein without departing from the scope of the appended claims.

According to its broadest aspect, the invention relates to a workpiece transfer robot comprising:
a robot body;
at least one arm operatively coupled to said robot body and
a holder mechanism mounted on said arm for holding a workpiece.

## Claims

1. A workpiece transfer robot comprising:
a robot body;
at least one arm operatively coupled to said robot body by at least one joint;
a holder mechanism mounted on said arm for holding a workpiece; and
an oilless sliding seal provided at said joint for preventing liquid from entering an interior of said joint.

2. A workpiece transfer robot according to claim 1, wherein said oilless sliding seal comprises a ring member made of synthetic resin and having an annular sliding lip at a tip end thereof, said annular sliding lip being in contact with an annular sliding ridge, said ring member being mounted on a first member comprising one of said robot body and said arm, and said annular sliding ridge being provided on a second member positioned adjacent to said first member and comprising one of said robot body and said arm.

3. A workpiece transfer robot comprising:
a robot body;
at least one arm operatively coupled to said robot body by at least one joint;
a holder mechanism mounted on said arm for holding a workpiece; and
a seal mechanism provided at said joint for preventing liquid from entering an interior of said joint, sealing area of said seal mechanism being provided at a position higher than the highest surface level of liquid deposited on an upper surface of one of said robot body and said arm.

4. A workpiece transfer robot according to claim 3, wherein said seal mechanism comprises an oilless sliding seal.

5. A workpiece transfer robot according to claim 4, wherein said oilless sliding seal comprises a ring member made of synthetic resin and having an annular sliding lip at a tip end thereof, said annular sliding lip being in contact with an annular sliding ridge, said ring member being mounted on a first member comprising one of said robot body and said arm, and said annular sliding ridge being provided on a second member positioned adjacent to said first member and comprising one of said robot body and said arm.

6. A workpiece transfer robot comprising:
a robot body;
at least one arm operatively coupled to said robot body by at least one joint;
a vacuum chuck mechanism mounted on said arm for holding a workpiece under vacuum; a vacuum path extending from said robot body through said
joint and said arm to said vacuum chuck mechanism;
a seal mechanism provided at said joint for preventing liquid from entering an interior of said joint; and
a vent hole provided in said arm for substantially equalizing a pressure in said arm to a pressure outside of said arm.

7. A workpiece transfer robot according to claim 6, wherein said seal mechanism comprises an oilless sliding seal.

8. A workpiece transfer robot according to claim 7, wherein said oilless sliding seal comprises a ring member made of synthetic resin and having an annular sliding lip at a tip end thereof, said annular sliding lip being in contact with an annular sliding ridge, said ring member being mounted on a first member comprising one of said robot body and said arm, and said annular sliding ridge being provided on a second member positioned adjacent to said first member and comprising one of said robot body and said arm.

9. A workpiece transfer robot comprising:
a robot body;
at least one arm operatively coupled to said robot body and
a holder mechanism mounted on said arm for holding a workpiece.
